# EUROPÄISCHE PATENTSCHRIFT

(11) **EP 2 878 926 B1**
(45) Veröffentlichungstag und Bekanntmachung des Hinweises auf die Patenterteilung: **12.07.2017**
(21) Anmeldenummer: 14183386.3
(22) Anmeldetag: 03.09.2014
(51) Int. Cl.: G01D 5/14

(54) **MULTITURN-DREHGEBER**
MULTI-TURN ROTARY ENCODER
ENCODEUR À PLUSIEURS ROTATIONS

(30) Priorität: 27.11.2013 DE 102013224247
(43) Veröffentlichungstag der Anmeldung: 03.06.2015
(73) Patentinhaber: Dr. Johannes Heidenhain GmbH, 83301 Traunreut (DE)
(72) Erfinder: Von Berg, Martin, 83236 Übersee (DE)

(56) Entgegenhaltungen:
- EP-A1- 1 457 762
- DE-A1-102007 062 780
- DE-A1-102008 051 083
- DE-A1-102009 029 431

## Beschreibung

### GEBIET DER TECHNIK

Die Erfindung betrifft einen sicheren Multiturn-Drehgeber gemäß dem Anspruch 1, sowie ein Verfahren zum Betreiben eines derartigen Multiturn-Drehgebers nach Anspruch 6. Derartige Multiturn-Drehgeber werden beispielsweise in der Automatisierungstechnik eingesetzt, um Winkelpositionen und die Anzahl zurückgelegter Umdrehungen von Wellen zu messen.

### STAND DER TECHNIK

Positionsmesseinrichtungen zur Messung der Winkelposition einer Welle sind aus einer Vielzahl von Druckschriften bekannt. Derartige Positionsmesseinrichtungen werden als Drehgeber bezeichnet. Ist eine Positionsmesseinrichtung darüber hinaus so ausgeführt, dass neben der Winkelposition der Welle auch die Anzahl der von der Welle zurückgelegten Umdrehungen messbar ist, spricht man von einem Multiturn-Drehgeber.

Für die Ausführung der Multiturn-Einheit, also der Einheit zur Feststellung der Anzahl der zurückgelegten Umdrehungen der Welle sind grundsätzlich zwei Lösungen bekannt, zum einen getriebebasierte Multiturn-Einheiten, zum anderen zählerbasierte Multiturn-Einheiten.

Bei getriebebasierten Multiturn-Einheiten treibt die Eingangswelle eine oder auch mehrere Getriebestufen an, die die Eingangsdrehzahl untersetzen. Bei einer Getriebestufe mit einem Untersetzungsverhältnis von 16:1 beispielsweise dreht sich die Ausgangswelle der Getriebestufe einmal je 16 Umdrehungen der Eingangswelle. Die Ausgangswelle treibt wiederum einen Codeträger an, dessen Winkelstellung Rückschlüsse auf die Umdrehungszahl der Eingangswelle erlaubt.

Ein Beispiel für einen getriebebasierten Multiturn-Drehgeber ist in der DE 28 17 172 A1 beschrieben. Dabei handelt es sich um einen mehrstufigen Winkelschrittgeber mit einer ersten Winkelschritt-Codescheibe und mehreren nachgeschalteten Winkelschritt-Codescheiben.

Die EP 1 457 762 A1 beschreibt eine Vorrichtung zur Messung der Position, des Weges oder des Drehwinkels eines Objektes. Sie enthält drei Maßverkörperungen in Form von drei aufeinander folgenden Codescheiben, die über ein Differenzzahngetriebe gekoppelt sind. Die Abtastung der Codescheiben erfolgt durch eine die Codespuren sämtlicher Codescheiben radial überdeckende Abtasteinheit.

Getriebebasierte Multiturn-Einheiten sind per se stromversorgungsunabhängig, d.h. sie funktionieren auch im ausgeschalteten Zustand des Drehgebers. Das liegt ganz einfach daran, dass sich die Codescheiben, angetrieben durch das Getriebe, auch ohne Stromversorgung drehen. Nach dem Wiedereinschalten des Drehgebers kann die Anzahl der zurückgelegten Umdrehungen der Eingangswelle durch Ermitteln der Winkelstellung der Codescheiben der Multiturn-Einheit bestimmt werden.

Zählerbasierte Multiturn-Einheiten ermitteln die Anzahl zurückgelegter Umdrehungen einer Welle durch Zählen der Umdrehungen eines Codeträgers, der unmittelbar von der Welle angetrieben wird und somit die gleiche Anzahl von Umdrehungen wie die zu messende Welle zurücklegt. Auf dem Codeträger ist ein Code angeordnet, der von einer Abtasteinheit abgetastet wird. Aus den mit der Abtasteinheit ermittelten Positionssignalen werden in einer Zählelektronik Zählsignale für einen Zähler generiert, der die Anzahl vollständiger Umdrehungen des Codeträgers und somit der Welle drehrichtungsabhängig zählt. Ohne weitere Maßnahmen sind zählerbasierte Multiturn-Einheiten stromversorgungsabhängig, d.h. bei Abschaltung der Stromversorgung des Drehgebers geht zum Einen der Wert des Zählers verloren, zum Anderen können Umdrehungen der Welle nicht mehr gezählt werden. Nach dem Wiedereinschalten ist der Zähler zurückgesetzt.

Um den Zählerstand des Zählers auch bei ausgeschalteter Hauptstromversorgung, also beispielsweise wenn die Maschine, in der der Multiturn-Drehgeber betrieben wird, ausgeschaltet ist, zu speichern und darüber hinaus die Zählfunktion zu erhalten, sind zählerbasierte Multiturn-Einheiten häufig mit einer Batterie ausgestattet, die bei Ausfall der Hauptstromversorgung die Energieversorgung zumindest der Multiturn-Einheit des Drehgebers übernimmt.

Die EP 1 462 771 B1 beschreibt beispielsweise einen Multiturn-Drehgeber mit einer zählerbasierten Multiturn-Einheit, die im ausgeschalteten Zustand mit einer Batterie betrieben ist.

Diese und andere Maßnahmen, die es ermöglichen, eine zählerbasierte Multiturn-Einheit zu ertüchtigen, stromversorgungsunabhängig zu funktionieren, sind aufwändig und sollen daher vermieden werden. Gerade der Einsatz einer Batterie ist problematisch, da auch bei stromsparenden elektrischen Schaltungen früher oder später ein Batteriewechsel erforderlich ist.

Aus sicherheitstechnischen Gründen kann es erforderlich sein, die Anzahl der Umdrehungen einer Welle redundant zu messen, beispielsweise dann, wenn eine Fehlmessung zu einer Beschädigung Maschine, an der der Multiturn-Drehgeber betrieben wird, führen kann oder sogar eine Gefahr für das Bedienpersonal der Maschine entstehen kann.

Die DE 10 2009 029 431 A1 schlägt deshalb einen Multiturn-Drehgeber vor, der mit zwei stromversorgungsunabhängigen Multiturn-Einheiten ausgestattet ist. Ein Vergleich der Messwerte der Multiturn-Einheiten ermöglicht zu jeder Zeit eine Überprüfung der Funktionsfähigkeit des Multiturn-Drehgebers. Dieser ist somit für den Einsatz in sicherheitsrelevanten Applikationen geeignet.

Die DE 10 2007 062 780 A1 beschreibt einen magnetischen Absolutkodierer mit zwei Multiturn-Einheiten, von denen eine bei einem Ausfall der externen Energieversorgung mittels einer internen Backup-Energieversorgung mit Energie versorgt wird. Bei Wiederkehr der Energieversorgung wird der Zählwert dieser Multiturn-Einheit in die andere Multiturn-Einheit geladen. Nachteilig ist hier, dass bei einem Ausfall der Backup-Energieversorgung während eines Ausfalls der externen Energieversorgung der Multiturn-Zählwert verloren geht und dadurch ein Ausfall des magnetischen Absolutkodierers verursacht wird.

### ZUSAMMENFASSUNG DER ERFINDUNG

Es ist Aufgabe der Erfindung, einen Multiturn-Drehgeber anzugeben, der bei einfachem Aufbau für sicherheitsrelevante Applikationen geeignet ist.

Diese Aufgabe wird gelöst durch einen Multiturn-Drehgeber nach Anspruch 1.

Es wird nun ein Multiturn-Drehgeber vorgeschlagen, mit
- einer Singleturn-Einheit, umfassend einen Codeträger, der zur Erzeugung von Singleturn-Positionssignalen von einer Singleturn-Abtasteinrichtung abtastbar ist und eine Singleturn-Auswerteeinheit zur Verarbeitung der Singleturn-Positionssignale zu wenigstens einem Singleturn-Codewort, das die absolute Position einer Eingangswelle innerhalb einer Umdrehung angibt,
- einer stromversorgungsabhängigen ersten Multiturn-Einheit, umfassend wenigstens einen ersten Multiturn-Codeträger, der zur Erzeugung von ersten Multiturn-Positionssignalen von einer ersten Multiturn-Abtasteinrichtung abtastbar ist und eine erste Multiturn-Auswerteeinheit zur Verarbeitung der ersten Multiturn-Positionssignale zu einem ersten Multiturn-Codewort, das die Anzahl der zurückgelegten Umdrehungen der Eingangswelle angibt,
- einer stromversorgungsunabhängigen zweiten Multiturn-Einheit, umfassend wenigstens einen zweiten Multiturn-Codeträger, der zur Erzeugung von zweiten Multiturn-Positionssignalen von einer zweiten Multiturn-Abtasteinrichtung abtastbar ist und eine zweite Multiturn-Auswerteeinheit zur Verarbeitung der zweiten Multiturn-Positionssignale zu einem zweiten Multiturn-Codewort, das ebenfalls die Anzahl der zurückgelegten Umdrehungen der Eingangswelle angibt, wobei
der Wert des ersten Multiturn-Codewortes der ersten Multiturn-Einheit in einer Initialisierungsphase nach dem Einschalten der Stromversorgung des Multiturn-Drehgebers mit dem Wert des zweiten Multiturn-Codewortes referenzierbar ist und wobei die zweite Multiturn-Einheit (30) eine getriebebasierte Multiturn-Einheit ist. Weiter ist es Aufgabe der Erfindung, ein Verfahren zum Betreiben eines derartigen Multiturn-Drehgebers anzugeben.

Diese Aufgabe wird gelöst durch ein Verfahren nach Anspruch 6. Hier wird ein Verfahren zum Betreiben eines Multiturn-Drehgebers mit
- einer Singleturn-Einheit, umfassend einen Codeträger, der zur Erzeugung von Singleturn-Positionssignalen von einer Singleturn-Abtasteinrichtung abtastbar ist und eine Singleturn-Auswerteeinheit zur Verarbeitung der Singleturn-Positionssignale zu wenigstens einem Singleturn-Codewort, das die absolute Position einer Eingangswelle innerhalb einer Umdrehung angibt,
- einer stromversorgungsabhängigen ersten Multiturn-Einheit, umfassend wenigstens einen ersten Multiturn-Codeträger, der zur Erzeugung von ersten Multiturn-Positionssignalen von einer ersten Multiturn-Abtasteinrichtung abtastbar ist und eine erste Multiturn-Auswerteeinheit zur Verarbeitung der ersten Multiturn-Positionssignale zu einem ersten Multiturn-Codewort, das die Anzahl der zurückgelegten Umdrehungen der Eingangswelle angibt,
- einer stromversorgungsunabhängigen zweiten Multiturn-Einheit, die eine getriebebasierte Multiturn-Einheit ist, umfassend wenigstens einen zweiten Multiturn-Codeträger, der zur Erzeugung von zweiten Multiturn-Positionssignalen von einer zweiten Multiturn-Abtasteinrichtung abtastbar ist und eine zweite Multiturn-Auswerteeinheit zur Verarbeitung der zweiten Multiturn-Positionssignale zu einem zweiten Multiturn-Codewort, das ebenfalls die Anzahl der zurückgelegten Umdrehungen der Eingangswelle angibt, vorgeschlagen, wobei
der Wert des ersten Multiturn-Codewortes der ersten Multiturn-Einheit in einer Initialisierungsphase nach dem Einschalten der Stromversorgung des Multiturn-Drehgebers mit dem Wert des zweiten Multiturn-Codewortes referenziert wird.

Weitere Vorteile und Details eines erfindungsgemäßen Multiturn-Drehgebers, sowie eines Verfahrens zum Betreiben eines derartigen Multiturn-Drehgebers ergeben sich aus der Beschreibung der nachfolgenden Ausführungsbeispiele.

### KURZE BESCHREIBUNG DER ZEICHNUNGEN

Es zeigt
- Figur 1: ein erstes Ausführungsbeispiel eines erfindungsgemäßen Multiturn-Drehgebers,
- Figur 2: ein Blockschaltbild der ersten Multiturn-Auswerteeinheit aus Figur 1,
- Figur 3: ein Blockschaltbild des Multiturn-Drehgebers aus Figur 1,
- Figur 4: ein weiteres Ausführungsbeispiel eines erfindungsgemäßen Multiturn-Drehgebers und
- Figur 5: ein Blockschaltbild des Multiturn-Drehgebers aus Figur 4.

### BESCHREIBUNG DER AUSFÜHRUNGSFORMEN

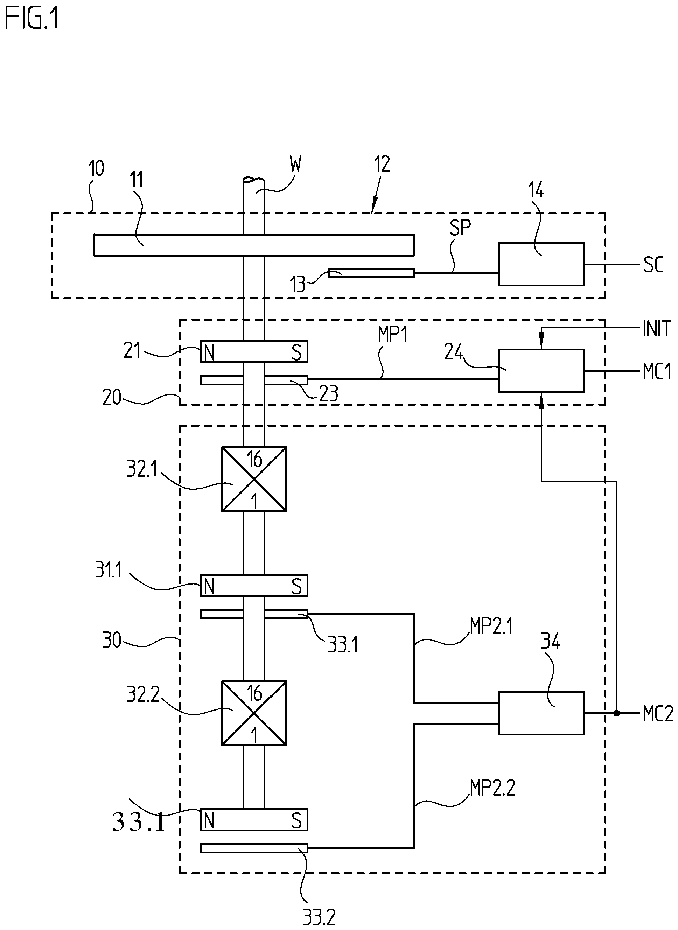

In Figur 1 ist das Prinzip eines ersten erfindungsgemäßen Multiturn-Drehgebers dargestellt. Er besteht aus einer Singleturn-Einheit 10, einer ersten Multiturn-Einheit 20, sowie einer zweiten Multiturn-Einheit 30.

Die Singleturn-Einheit 10 wird von einer Codescheibe 11 gebildet, die direkt mit einer zu messenden Eingangswelle W gekoppelt ist. Die Codescheibe 11 trägt eine lichtelektrisch, magnetisch, kapazitiv oder induktiv abtastbare Codierung 12, um eine Umdrehung der Eingangswelle W in eine Vielzahl von unterscheidbaren Sektoren aufzuteilen. Diese Codierung 12 kann digital oder analog ausgeführt sein. Eine digitale Codierung 12 kann beispielsweise als mehrspuriger Code, z.B. ein Gray-Code, oder auch durch einen einspurigen Kettencode, einem sog. "Pseudo Random Code" (PRC) ausgeführt sein. Bei einer analogen Codierung 12 entstehen bei der Abtastung analoge Abtastsignale, aus deren Amplituden und/oder Phasenlagen die Winkelposition der Eingangswelle W bestimmt werden kann. Die Codierung 12 wird zur Bildung von Singleturn-Positionssignalen SP von einer Abtasteinrichtung 13 abgetastet. Die Singleturn-Positionssignale SP sind einer Singleturn-Auswerteeinheit 14 zugeführt, die ein mehrstelliges Singleturn-Codewort SC bildet und an ihrem Ausgang ausgibt, das die Absolutposition der Eingangswelle W innerhalb einer einzigen Umdrehung angibt.

Zur Erfassung der Umdrehungszahlen der Eingangswelle W sind die Multiturn-Einheiten 20, 30 vorgesehen.

Die erste Multiturn-Einheit 20 ist eine zählerbasierte Multiturn-Einheit. Sie besteht aus einem ersten Multiturn-Codeträger 21, der ebenfalls drehfest mit der Eingangswelle W verbunden ist. Der erste Multiturn-Codeträger 21 weist einen einzigen magnetischen Dipol auf, also einen Nord- und einen Südpol.

Die Pole werden von einer ersten Multiturn-Abtasteinrichtung 23 abgetastet. Diese weist mehrere magnetfeldempfindliche Sensorelemente auf, mit denen erste Multiturn-Positionssignale MP1 generierbar sind, aus denen in einer ersten Multiturn-Auswerteeinheit 24 ein erstes Multiturn-Codewort MC1 gebildet werden kann, das die absolute Position des ersten Multiturn-Codeträgers 21 angibt. Bei den Sensorelementen handelt es sich beispielsweise um Hall-Sensoren, MR-Sensoren oder GMR-Sensoren. Mit Vorteil sind die Sensorelemente und die erste Multiturn-Auswerteeinheit 24 zusammen auf einem Halbleitersubstrat integriert.

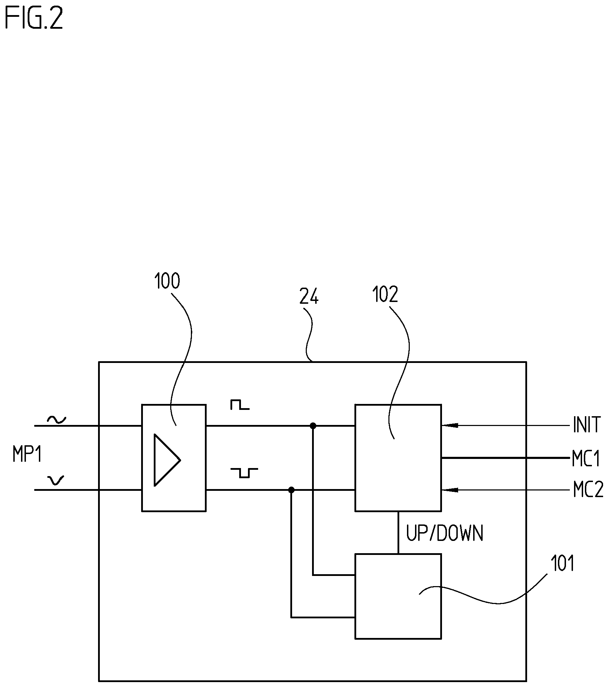

Figur 2 zeigt ein Blockschaltbild der ersten Multiturn-Auswerteeinheit 24. Dabei wird angenommen, dass die ersten Multiturn-Positionssignale MP1 zwei Signale umfassen, die einen weitgehend sinusförmigen Verlauf aufweisen und während einer Umdrehung der Eingangswelle W eine vollständige Periode der Sinusschwingung durchlaufen. Üblicherweise weisen diese beiden Signale eine Phasenverschiebung von ca. 90° zueinander auf, wodurch es möglich wird, die Drehrichtung der Eingangswelle W zu bestimmen.

In der ersten Multiturn-Auswerteeinheit 24 sind die ersten Multiturn-Positionssignale MP1 zuerst einer Signalformungseinheit 100 zugeführt, die aus den sinusförmigen Eingangssignalen digitale, rechteckförmige Zählsignale formt, die sie zum einen einem Richtungsdiskriminator 101 und zum anderen einer Zählereinheit 102 zuführt. Der Richtungsdiskriminator 101 stellt aus der zeitlichen Abfolge der Flanken der Zählsignale die Drehrichtung fest und übermittelt diese als Richtungssignal UP/DOWN der Zählereinheit 102. Die Zählereinheit 102 verwendet wiederum wenigstens eine steigende oder fallende Flanke der Zählsignale, sowie das Richtungssignal UP/DOWN, zum richtungsabhängigen Zählen der Umdrehungen der Eingangswelle W.

In der ersten Multiturn-Auswerteeinheit 24 sind, ebenso wie in der übergeordneten Multiturn-Einheit 20, keine Maßnahmen vorgesehen, die eine Funktion auch im ausgeschalteten Zustand des Multiturn-Drehgebers ermöglichen. Mit dem Ausschalten der Stromversorgung verliert die Zählereinheit 102 den aktuellen Zählwert und eine Bewegung der Eingangswelle W bleibt unbemerkt. Die Multiturn-Einheit 20 ist also eine stromversorgungsabhängige Multiturn-Einheit.

Bei der zweiten Multiturn-Einheit 30 handelt es sich um eine getriebebasierte Multiturn-Einheit, die beispielhaft mit zwei Getriebestufen 32.1, 32.2 dargestellt ist. Die Anzahl der benötigten Getriebestufen hängt weitgehend von der Anzahl der festzustellenden Umdrehungen der Eingangswelle W, sowie der Anzahl der mit einer Getriebestufe feststellbaren Umdrehungen, ab. Sollen nur wenige Umdrehungen der Eingangswelle W gemessen werden, so reicht ggf. eine Getriebestufe aus. Zur Feststellung der Umdrehungen einer Vorschubspindel einer Werkzeugmaschine können dagegen drei und mehr Getriebestufen erforderlich sein.

Die erste Getriebestufe 32.1 ist direkt mit der Eingangswelle W gekoppelt. Sie weist eine 16-fache Untersetzung auf und ihre Ausgangswelle ist wiederum mit der zweiten Getriebestufe 32.2 gekoppelt, die ebenfalls eine Untersetzung um den Faktor 16 durchführt. Die Getriebestufen 32.1, 32.2 treiben jeweils zweite Multiturn-Codeträger 31.1, 31.2 an, die von zweiten Multiturn-Abtasteinrichtungen 33.1, 33.2 zur Erzeugung von zweiten Multiturn-Positionssignalen MP2.1, MP2.2 abgetastet werden. Die Information, in welcher der zählbaren Umdrehungen sich die Eingangswelle W gerade befindet, ist in der Winkelstellung der zweiten Multiturn-Codeträger 31.1, 31.2 codiert. Die zweiten Multiturn-Codeträger 31.1, 31.2 werden, wie bereits der erste Multiturn-Codeträger 21, aus nur einem magnetischen Dipol gebildet. Die Abtastung der zweiten Multiturn-Codeträger 31.1, 31.2 erfolgt somit analog zur Abtastung des ersten Multiturn-Codeträgers 21. Abweichend zu den Multiturn-Positionssignalen MP1 der ersten Multiturn-Einheit 20 werden die zweiten Multiturn-Positionssignale MP1, MP2 jedoch in einer zweiten Multiturn-Auswerteeinheit 34 interpoliert, d.h. Momentanwerten der Multiturn-Positionssignale MP1, MP2 werden Absolutwerte zugeordnet, die die Winkelposition der jeweiligen Multiturn-Codeträger 31.1, 31.2 angeben. Die Auflösung der Momentanwerte entspricht mindestens dem Untersetzungsverhältnis der zugehörigen Getriebestufe. Schließlich verarbeitet die zweite Multiturn-Auswerteeinheit 34 die ermittelten Absolutwerte der zweiten Multiturn-Positionssignale MP2.1, MP2.2 zu einem zweiten Multiturn-Codewort MC2.

Neben der hier beschriebenen Variante mit einem mehrstufigen Untersetzungsgetriebe sind für die vorliegende Erfindung selbstverständlich auch getriebebasierte Multiturn-Einheiten geeignet, die, wie die eingangs erwähnte EP1457762A1 vorschlägt, auf einem Differenzzahngetriebe beruhen.

Durch die zwei vorgesehenen Multiturn-Einheiten 20, 30 stehen im Multiturn-Drehgeber zwar zwei Multiturn-Codewörter MC1, MC2 zur Verfügung, die unabhängig voneinander gebildet werden, aber dadurch, dass die erste Multiturn-Einheit 20 nach dem Einschalten stets neu zu zählen beginnt, kann unmittelbar nach dem Einschalten der Stromversorgung durch Vergleich dieser zwei Multiturn-Codewörter MC1, MC2 nicht festgestellt werden, ob die beiden Multiturn-Einheiten 20, 30 funktionieren.

Untersuchungen haben nun gezeigt, dass die Wahrscheinlichkeit, dass getriebebasierte Multiturn-Einheiten während des Stillstands der Maschine, an der sie betrieben werden, ausfallen, extrem niedrig ist. Das bedeutet im Umkehrschluss, dass nach dem Einschalten der Maschine und damit des Multiturn-Drehgebers, mit sehr hoher Wahrscheinlichkeit davon ausgegangen werden kann, dass der Messwert der getriebebasierten Multiturn-Einheit 30 korrekt ist.

Basierend auf dieser Tatsache liegt der vorliegenden Erfindung die Erkenntnis zugrunde, dass der Wert des ersten (in der zählerbasierten, stromversorgungsabhängigen ersten Multiturn-Einheit 20 generierten) Multiturn-Codeworts MC1 in einer Initialisierungsphase nach dem Einschalten der Versorgungsspannung mit dem Wert des zweiten (mit der getriebebasierten, stromversorgungsunabhängigen zweiten Multiturn-Einheit 30 generierten) Multiturn-Codeworts MC2 referenziert werden kann. In anderen Worten kann der Wert des zweiten Multiturn-Codeworts MC2 als Referenzwert verwendet werden, um einen Bezug zwischen dem ersten Multiturn-Codewort MC1 und dem zweiten Multiturn-Codewort MC2 herzustellen. Im weiteren Betrieb ist es dann möglich, durch Vergleich dieser zwei Multiturn-Codewörter MC1, MC2 Rückschlüsse auf die korrekte Funktion der Multiturn-Einheiten 20, 30 zu ziehen.

Wie Figur 1 zeigt, kann das Referenzieren beispielsweise dadurch erfolgen, dass die erste Multiturn-Einheit 20 nach dem Einschalten der Stromversorgung mit dem Messwert der zweiten Multiturn-Einheit 30 (also dem zweiten Multiturn-Codewort MC2) initialisiert wird. Hierzu ist das zweite Multiturn-Codewort MC2 der ersten Multiturn-Auswerteeinheit 24, insbesondere der Zählereinheit 102, zugeführt. Die Initialisierung wird durch ein Initialisierungssignal INIT gesteuert, das ebenfalls der Multiturn-Auswerteeinheit 24 zugeführt ist. Im weiteren Betrieb werden die Multiturn-Codewörter MC1, MC2 von den korrespondierenden Multiturn-Einheiten 20, 30 dann wieder unabhängig voneinander generiert, so dass durch Prüfung der Multiturn-Codewörter MC1, MC2 auf Gleichheit eine Fehlfunktion von einer der Multiturn-Einheiten 20, 30 sicher erkannt werden kann.

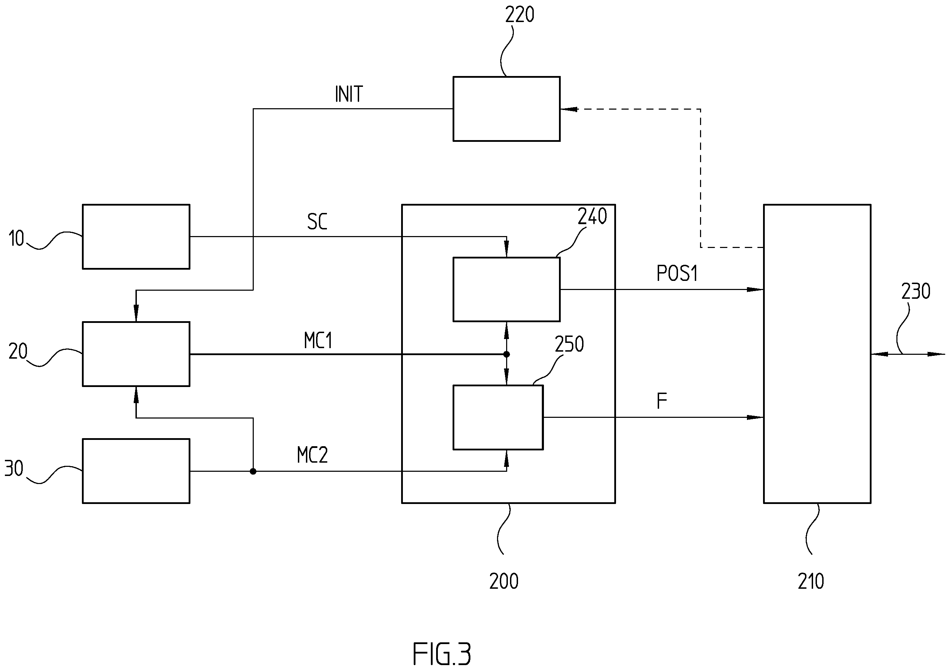

Figur 3 zeigt ein Blockdiagramm des erfindungsgemäßen Multiturn-Drehgebers aus Figur 1. Er umfasst die Singleturn-Einheit 10, die erste Multiturn-Einheit 20 und die zweite Multiturn-Einheit 30, deren Ausgangssignale SC, MC1, MC2 einer Verarbeitungseinheit 200 zugeführt sind. Zur Kommunikation mit einer (nicht dargestellten) Folgeelektronik über einen Datenübertragungskanal 230 ist eine Schnittstelleneinheit 210 vorgesehen. Die Datenübertragung kann beispielsweise seriell erfolgen. Geeignete serielle Schnittstellen sind dem Fachmann hinreichend bekannt.

Zur Erzeugung des Initialisierungssignals INIT umfasst der Multiturn-Drehgeber weiter eine Initialisierungs-Einheit 220. Diese kann so gestaltet sein, dass das Initialisierungssignal INIT automatisch nach dem Einschalten der Stromversorgung generiert wird, sobald das zweite Multiturn-Codewort MC2 zur Verfügung steht. Alternativ, oder zusätzlich kann vorgesehen sein, dass die Erzeugung des Initialisierungssignals INIT von der Folgeelektronik über die Schnittstelleneinheit 210 ausgelöst wird, beispielsweise indem ein spezieller Befehl von der Folgeelektronik zum Multiturn-Drehgeber gesendet wird.

Die Verarbeitungseinheit 200 ist in diesem Ausführungsbeispiel so ausgestaltet, dass zum Einen in einer Codeanschluss-Einheit 240 aus dem Singleturn-Codewort und dem ersten Multiturn-Codewort MC1 ein kombiniertes Positions-Datenwort POS1 generiert wird und zum Anderen eine Vergleichereinheit 250 vorgesehen ist, die durch Vergleich des ersten Multiturn-Codeworts MC1 mit dem zweiten Multiturn-Codewort MC2 die ordnungsgemäße Funktion der Multiturn-Einheiten 20, 30 feststellt und einen festgestellten Fehler als Fehlerflag F zur Schnittstelleneinheit 210 ausgibt. Positions-Datenwort POS1 und Fehlerflag F sind über die Schnittstelleneinheit 210 und den Datenübertragungskanal 230 zur Folgeelektronik übertragbar. Die Folgeelektronik kann das Zustandsflag F auswerten und im Fehlerfall geeignete Maßnahmen, beispielsweise das geordnete Anhalten der Maschine, veranlassen.

Alternativ ist es auch möglich, auf die Verarbeitungseinheit 200 zu verzichten und das Singleturn-Codewort SC, das erste Multiturn-Codewort MC1, sowie das zweite Multiturn-Codewort MC2 für die Übertragung zur Folgeelektronik direkt der Schnittstelleneinheit 210 zuzuführen.

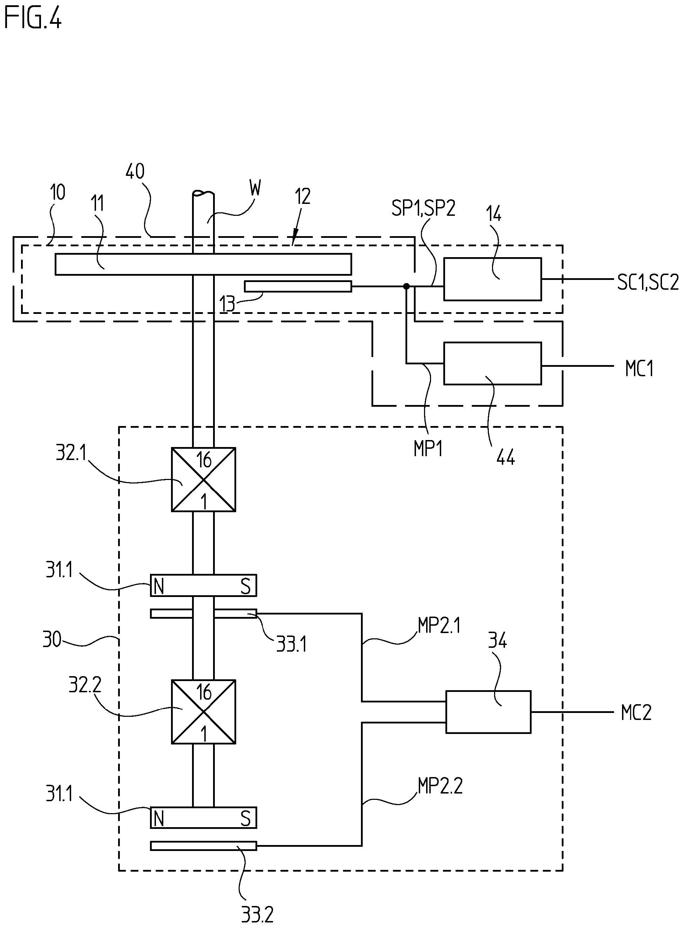

Figur 4 zeigt eine Prinzipdarstellung einer weiteren Ausführungsform eines erfindungsgemäßen Multiturn-Drehgebers. Er besteht ebenfalls aus einer Singleturn-Einheit 10, einer ersten Multiturn-Einheit 40 und einer zweiten Multiturn-Einheit 30. Die zweite Multiturn-Einheit 30 entspricht weitgehend der im Zusammenhang mit Figur 1 beschriebenen Einheit und wird nicht noch einmal beschrieben.

Die Singleturn-Einheit 10 ist in diesem Beispiel so ausgestaltet, dass zwei voneinander unabhängige Singleturn-Codewörter SC1, SC2 erzeugt werden. Das kann dadurch erreicht werden, dass die Singleturn-Abtasteinrichtung 13 und die Singleturn-Auswerteeinheit 14 zweikanalig ausgeführt sind. So entstehen in der Singleturn-Abtasteinrichtung 13 zwei Gruppen von Singleturn-Positionssignalen SP1, SP2, aus denen in der Singleturn-Auswerteeinheit 14 die korrespondierenden Singleturn-Codewörter SC1, SC2 generiert werden.

Die erste Multiturn-Einheit 40 nutzt dagegen die Tatsache, dass auch die Singleturn-Positionssignale SP1, SP2, die aus der Abtastung des Codes 12 auf dem Codeträger 11 mit der Singleturn-Abtasteinrichtung 13 resultieren, zur Bildung eines ersten Multiturn-Codeworts MC1 herangezogen werden können. Daher sind die Singleturn-Positionssignale SP1, SP2 wenigstens einer der zwei Gruppen, zumindest teilweise (soweit sie zur Bildung des ersten Multiturn-Codeworts MC1 erforderlich sind), als erste Multiturn-Positionssignale MP1 einer ersten Multiturn-Auswerteeinheit 44 zugeführt, die hieraus Zählsignale zur Bildung des ersten Multiturn-Codeworts MC1 generiert und zählt. Bei der ersten Multiturn-Einheit 40 handelt es sich somit wiederum um eine zählerbasierte Multiturn-Einheit. Auch in diesem Beispiel sind keine Maßnahmen vorgesehen, um zu erreichen, dass die erste Multiturn-Einheit 40 auch bei Wegfall der Stromversorgung des Multiturn-Drehgebers funktioniert. Es handelt sich also wiederum um eine stromversorgungsabhängige Multiturn-Einheit.

Neben der ersten Multiturn-Auswerteeinheit 44 sind in diesem Ausführungsbeispiel auch der Codeträger 11 mit dem Code 12, sowie die Singleturn-Abtasteinrichtung 13 der ersten Multiturn-Einheit 40 zuzuordnen.

Das Referenzieren des Wertes des ersten Multiturn-Codeworts MC1 mit dem Wert des zweiten Multiturn-Codeworts MC2 kann in diesem Ausführungsbeispiel ebenfalls, wie in den vorhergehend beschriebenen Ausführungsbeispielen gezeigt, durch Initialisieren der ersten Multiturn-Auswerteeinheit 44 nach dem Einschalten der Stromversorgung erfolgen.

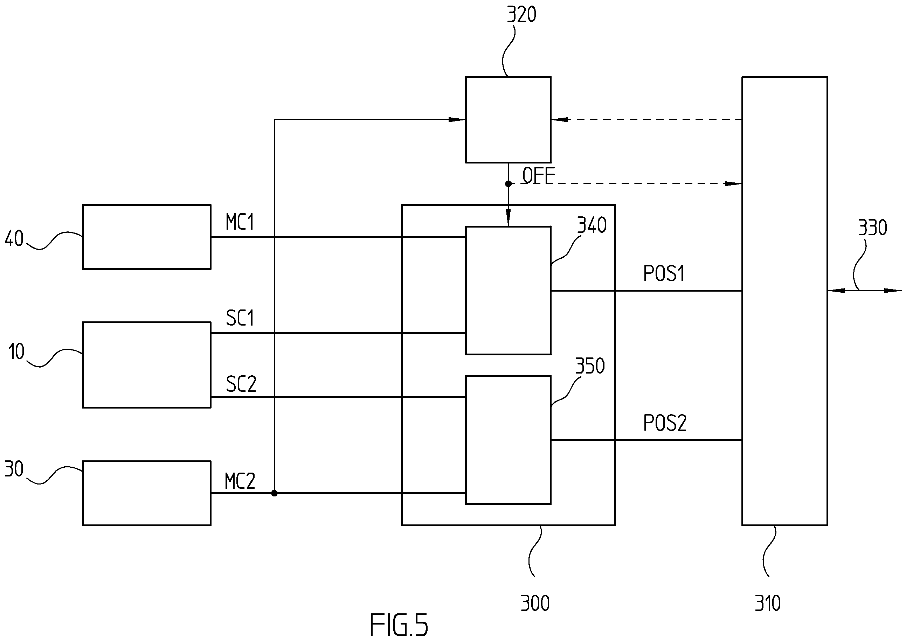

Figur 5 zeigt jedoch ein Blockdiagramm eines Multiturn-Drehgebers basierend auf der Prinzipdarstellung aus Figur 4, bei dem eine alternative Möglichkeit des Referenzierens vorgeschlagen wird. Der Multiturn-Drehgeber umfasst die Singleturn-Einheit 10, die erste Multiturn-Einheit 40 und die zweite Multiturn-Einheit 30, deren Ausgangssignale SC1, SC2, MC1, MC2 einer Verarbeitungseinheit 300 zugeführt sind. Diese umfasst zwei Codeanschluss-Einheiten 340, 350, die aus je einem Singleturn-Codewort SC1, bzw. SC2 und einem Multiturn-Codewort MC1, bzw. MC2 ein Positions-Datenwort POS1, bzw. POS2 bilden. Auch in diesem Ausführungsbeispiel ist eine Schnittstelleneinheit 310 zur Kommunikation und Datenübertragung zwischen dem Multiturn-Drehgeber und einer (nicht dargestellten) Folgeelektronik über einen Datenübertragungskanal 330 vorgesehen.

Zum Referenzieren des ersten Multiturn-Codeworts MC1 mit dem Wert des zweiten Multiturn-Codeworts MC2 ist wiederum eine Initialisierungs-Einheit 320 vorgesehen. Diese ist so ausgestaltet, dass sie nach dem Einschalten der Stromversorgung, sobald das zweite Multiturn-Codewort MC2 zur Verfügung steht, den Wert des zweiten Multiturn-Codeworts MC2 als Offsetwert OFF speichert. Da die erste Multiturn-Einheit 40 nach dem Wiedereinschalten zurückgesetzt ist und beim Wert "0" zu zählen beginnt, ist der Offsetwert OFF als konstante Differenz zwischen dem ersten Multiturn-Codewort MC1 und dem zweiten Multiturn-Codewort MC2 als Referenzwert geeignet und kann bei der weiteren Verarbeitung und Auswertung der Multiturn-Codeworte MC1, MC2 berücksichtigt werden.

So kann der Offsetwert OFF beispielsweise der ersten Codeanschluss-Einheit 340 zuführt sein. Diese berücksichtigt den Offsetwert OFF bei der Bildung des ersten Positions-Datenworts POS1 (durch Korrektur des ersten Multiturn-Codewortes MC1), so dass das erste Positions-Datenwort POS1 und das zweite Positions-Datenwort POS2 wieder den gleichen Wert aufweisen und die ordnungsgemäße Funktion der Multiturn-Einheiten 30, 40 durch Vergleich der Positionsdatenwörter POS1, POS2 im Multiturn-Drehgeber (wie in Figur 3 gezeigt) oder in der Folgeelektronik festgestellt werden kann.

Alternativ kann der Offsetwert OFF über die Schnittstelleneinheit 310 und den Datenübertragungskanal 330 zur Folgeelektronik übertragen und dort beim Vergleich der Positions-Datenwörter POS1, POS2 berücksichtigt werden.

## Patentansprüche

1. Multiturn-Drehgeber mit
- einer Singleturn-Einheit (10), umfassend einen Codeträger (11), der zur Erzeugung von Singleturn-Positionssignalen (SP, SP1, SP2) von einer Singleturn-Abtasteinrichtung (13) abtastbar ist und eine Singleturn-Auswerteeinheit (14) zur Verarbeitung der Singleturn-Positionssignale (SP, SP1, SP2) zu wenigstens einem Singleturn-Codewort (SC, SC1, SC2), das die absolute Position einer Eingangswelle (W) innerhalb einer Umdrehung angibt,
- einer stromversorgungsabhängigen ersten Multiturn-Einheit (20, 40), umfassend wenigstens einen ersten Multiturn-Codeträger (11, 21), der zur Erzeugung von ersten Multiturn-Positionssignalen (MP1) von einer ersten Multiturn-Abtasteinrichtung (13, 23) abtastbar ist und eine erste Multiturn-Auswerteeinheit (24) zur Verarbeitung der ersten Multiturn-Positionssignale (MP1) zu einem ersten Multiturn-Codewort (MC1), das die Anzahl der zurückgelegten Umdrehungen der Eingangswelle (W) angibt,
- einer stromversorgungsunabhängigen zweiten Multiturn-Einheit (30), umfassend wenigstens einen zweiten Multiturn-Codeträger (31.1, 31.2), der zur Erzeugung von zweiten Multiturn-Positionssignalen (MP2.1, MP2.2) von einer zweiten Multiturn-Abtasteinrichtung (33.1, 33.1) abtastbar ist und eine zweite Multiturn-Auswerteeinheit (34) zur Verarbeitung der zweiten Multiturn-Positionssignale (MP2.1, MP2.2) zu einem zweiten Multiturn-Codewort (MC2), das ebenfalls die Anzahl der zurückgelegten Umdrehungen der Eingangswelle (W) angibt, wobei
der Wert des ersten Multiturn-Codewortes (MC1) der ersten Multiturn-Einheit (20, 40) in einer Initialisierungsphase nach dem Einschalten der Stromversorgung des Multiturn-Drehgebers mit dem Wert des zweiten Multiturn-Codewortes (MC2) referenzierbar ist und wobei die zweite Multiturn-Einheit (30) eine getriebebasierte Multiturn-Einheit ist.

2. Multiturn-Drehgeber nach Anspruch 1, wobei die erste Multiturn-Einheit (20, 40) zum Referenzieren nach dem Einschalten der Stromversorgung von einer Initialisierungs-Einheit (220) mit dem Wert des zweiten Multiturn-Codewortes (MC2) initialisierbar ist.

3. Multiturn-Drehgeber nach Anspruch 2, wobei eine Schnittstelleneinheit (210, 310) zur Kommunikation mit einer Folgeelektronik über einen Datenübertragungskanal (230, 330) vorgesehen ist und das Initialisieren der ersten Multiturn-Einheit (20, 40) von der Schnittstelleneinheit (210, 310) auslösbar ist.

4. Multiturn-Drehgeber nach Anspruch 1, wobei zum Referenzieren der Wert des zweiten Multiturn-Codewortes (MC2) nach dem Einschalten der Stromversorgung von einer Initialisierungs-Einheit (320) als Offsetwert (OFF) speicherbar ist, der die Differenz zwischen dem Wert des zweiten Multiturn-Codeworts (MC2) und dem Wert des ersten Multiturn-Codewortes (MC1) angibt.

5. Multiturn-Drehgeber nach einem der vorhergehenden Ansprüche, wobei die erste Multiturn-Einheit (20, 40) eine zählerbasierte Multiturn-Einheit ist.

6. Verfahren zum Betrieb eines Multiturn-Drehgebers mit
- einer Singleturn-Einheit (10), umfassend einen Codeträger (11), der zur Erzeugung von Singleturn-Positionssignalen (SP, SP1, SP2) von einer Singleturn-Ablasteinrichtung (13) abtastbar ist und eine Singleturn-Auswerteeinheit (14) zur Verarbeitung der Singleturn-Positionssignale (SP, SP1, SP2) zu wenigstens einem Singleturn-Codewort (SC, SC1, SC2), das die absolute Position einer Eingangswelle (W) innerhalb einer Umdrehung angibt,
- einer stromversorgungsabhängigen ersten Multiturn-Einheit (20, 40), umfassend wenigstens einen ersten Multiturn-Codeträger (11, 21), der zur Erzeugung von ersten Multiturn-Positionssignalen (MP1) von einer ersten Multiturn-Abtasteinrichtung (13, 23) abtastbar ist und eine erste Multiturn-Auswerteeinheit (24) zur Verarbeitung der ersten Multiturn-Positionssignale (MP1) zu einem ersten Multiturn-Codewort (MC1), das die Anzahl der zurückgelegten Umdrehungen der Eingangswelle (W) angibt,
- einer stromversorgungsunabhängigen zweiten Multiturn-Einheit (30), die eine getriebebasierte Multiturn-Einheit ist, umfassend wenigstens einen zweiten Multiturn-Codeträger (31.1, 31.2), der zur Erzeugung von zweiten Multiturn-Positionssignalen (MP2.1, MP2.2) von einer zweiten Multiturn-Abtasteinrichtung (33.1, 33.1) abtastbar ist und eine zweite Multiturn-Auswerteeinheit (34) zur Verarbeitung der zweiten Multiturn-Positionssignale (MP2.1, MP2.2) zu einem zweiten Multiturn-Codewort (MC2), das ebenfalls die Anzahl der zurückgelegten Umdrehungen der Eingangswelle (W) angibt, wobei
der Wert des ersten Multiturn-Codewortes (MC1) der ersten Multiturn-Einheit (20, 40) in einer Initialisierungsphase nach dem Einschalten der Stromversorgung des Multiturn-Drehgebers mit dem Wert des zweiten Multiturn-Codewortes (MC2) referenziert wird.

7. Verfahren nach Anspruch 6, wobei die erste Multiturn-Einheit (20, 40) zum Referenzieren nach dem Einschalten der Stromversorgung von einer Initialisierungs-Einheit (220) mit dem Wert des zweiten Multiturn-Codewortes (MC2) initialisiert wird.

8. Verfahren nach Anspruch 7, wobei eine Schnittstelleneinheit (210, 310) zur Kommunikation mit einer Folgeelektronik über einen Datenübertragungskanal (230, 330) vorgesehen ist und das Initialisieren der ersten Multiturn-Einheit (20, 40) von der Schnittstelleneinheit (210, 310) ausgelöst wird.

9. Verfahren nach Anspruch 6, wobei zum Referenzieren der Wert des zweiten Multiturn-Codewortes (MC2) nach dem Einschalten der Stromversorgung von einer Initialisierungs-Einheit (320) als Offsetwert (OFF) gespeichert wird, der die Differenz zwischen dem Wert des zweiten Multiturn-Codeworts (MC2) und dem Wert des ersten Multiturn-Codewortes (MC1) angibt.

## Claims

1. Multi-turn rotary encoder having
- a single-turn unit (10) comprising a code carrier (11), which can be scanned by a single-turn scanning device (13) in order to generate single-turn position signals (SP, SP1, SP2), and a single-turn evaluation unit (14) for processing the single-turn position signals (SP, SP1, SP2) to form at least one single-turn code word (SC, SC1, SC2) which indicates the absolute position of an input shaft (W) within one revolution,
- a first multi-turn unit (20, 40) which is dependent on the power supply and comprises at least one first multi-turn code carrier (11, 21), which can be scanned by a first multi-turn scanning device (13, 23) in order to generate first multi-turn position signals (MP1), and a first multi-turn evaluation unit (24) for processing the first multi-turn position signals (MP1) to form a first multi-turn code word (MC1) which indicates the number of revolutions covered by the input shaft (W),
- a second multi-turn unit (30) which is independent of the power supply and comprises at least one second multi-turn code carrier (31.1, 31.2), which can be scanned by a second multi-turn scanning device (33.1, 33.1) in order to generate second multi-turn position signals (MP2.1, MP2.2), and a second multi-turn evaluation unit (34) for processing the second multi-turn position signals (MP2.1, MP2.2) to form a second multi-turn code word (MC2) which likewise indicates the number of revolutions covered by the input shaft (W),
the value of the first multi-turn code word (MC1) from the first multi-turn unit (20, 40) being able to be referenced with the value of the second multi-turn code word (MC2) in an initialization phase after switching on the power supply for the multi-turn rotary encoder, and the second multi-turn unit (30) being a transmission-based multi-turn unit.

2. Multi-turn rotary encoder according to Claim 1, the first multi-turn unit (20, 40) being able to be initialized by an initialization unit (220) with the value of the second multi-turn code word (MC2) for referencing after switching on the power supply.

3. Multi-term rotary encoder according to Claim 2, an interface unit (210, 310) being provided for the purpose of communicating with follower electronics via a data transmission cable (230, 330), and the initialization of the first multi-turn unit (20, 40) being able to be initiated by the interface unit (210, 310).

4. Multi-turn rotary encoder according to Claim 1, the value of the second multi-turn code word (MC2) being able to be stored by an initialization unit (320) for referencing after switching on the power supply as an offset value (OFF) which indicates the difference between the value of the second multi-turn code word (MC2) and the value of the first multi-turn code word (MC1).

5. Multi-turn rotary encoder according to one of the preceding claims, the first multi-turn unit (20, 40) being a counter-based multi-turn unit.

6. Method for operating a multi-turn rotary encoder having
- a single-turn unit (10) comprising a code carrier (11), which can be scanned by a single-turn scanning device (13) in order to generate single-turn position signals (SP, SP1, SP2), and a single-turn evaluation unit (14) for processing the single-turn position signals (SP, SP1, SP2) to form at least one single-turn code word (SC, SC1, SC2) which indicates the absolute position of an input shaft (W) within one revolution,
- a first multi-turn unit (20, 40) which is dependent on the power supply and comprises at least one first multi-turn code carrier (11, 21), which can be scanned by a first multi-turn scanning device (13, 23) in order to generate first multi-turn position signals (MP1), and a first multi-turn evaluation unit (24) for processing the first multi-turn position signals (MP1) to form a first multi-turn code word (MC1) which indicates the number of revolutions covered by the input shaft (W),
- a second multi-turn unit (30) which is independent of the power supply, is a transmission-based multi-turn unit and comprises at least one second multi-turn code carrier (31.1, 31.2), which can be scanned by a second multi-turn scanning device (33.1, 33.1) in order to generate second multi-turn position signals (MP2.1, MP2.2), and a second multi-turn evaluation unit (34) for processing the second multi-turn position signals (MP2.1, MP2.2) to form a second multi-turn code word (MC2) which likewise indicates the number of revolutions covered by the input shaft (W),
the value of the first multi-turn code word (MC1) from the first multi-turn unit (20, 40) being referenced with the value of the second multi-turn code word (MC2) in an initialization phase after switching on the power supply for the multi-turn rotary encoder.

7. Method according to Claim 6, the first multi-turn unit (20, 40) being initialized by an initialization unit (220) with the value of the second multi-turn code word (MC2) for referencing after switching on the power supply.

8. Method according to Claim 7, an interface unit (210, 310) being provided for the purpose of communicating with follower electronics via a data transmission cable (230, 330), and the initialization of the first multi-turn unit (20, 40) being initiated by the interface unit (210, 310).

9. Method according to Claim 6, the value of the second multi-turn code word (MC2) being stored by an initialization unit (320) for referencing after switching on the power supply as an offset value (OFF) which indicates the difference between the value of the second multi-turn code word (MC2) and the value of the first multi-turn code word (MC1).

## Revendications

1. Codeur rotatif multitour comprenant
- une unité monotour (10), comportant un porte-code (11) qui peut être palpé par un dispositif de palpage monotour (13) en vue de générer des signaux de position monotour (SP, SP1, SP2) et une unité d'interprétation monotour (14) destinée à transformer les signaux de position monotour (SP, SP1, SP2) en au moins un mot de code monotour (SC, SC1, SC2), lequel indique la position absolue d'un arbre d'entrée (W) à l'intérieur d'un tour,
- une première unité multitour (20, 40) dépendante de l'alimentation électrique, comportant au moins un premier porte-code multitour (11, 21) qui peut être palpé par un premier dispositif de palpage multitour (13, 23) en vue de générer des premiers signaux de position multitour (MP1) et une première unité d'interprétation multitour (24) destinée à transformer les premiers signaux de position multitour (MP1) en un premier mot de code multitour (MC1), lequel indique le nombre des tours effectués par l'arbre d'entrée (W),
- une deuxième unité multitour (30) indépendante de l'alimentation électrique, comportant au moins un deuxième porte-code multitour (31.1, 31.2) qui peut être palpé par un deuxième dispositif de palpage multitour (33.1, 33.2) en vue de générer des deuxièmes signaux de position multitour (MP2.1, MP2.2) et une deuxième unité d'interprétation multitour (34) destinée à transformer les deuxièmes signaux de position multitour (MP2.1, MP2.2) en un deuxième mot de code multitour (MC2), lequel indique également le nombre des tours parcourus par l'arbre d'entrée (W),
la valeur du premier mot de code multitour (MC1) de la première unité multitour (20, 40) pouvant être référencée à la valeur du deuxième mot de code multitour (MC2) au cours d'une phase d'initialisation après l'activation de l'alimentation électrique du codeur rotatif multitour, et la deuxième unité multitour (30) étant une unité multitour basée sur un engrenage.

2. Codeur rotatif multitour selon la revendication 1, la première unité multitour (20, 40) pouvant, en vue du référencement, être initialisée après l'activation de l'alimentation électrique par une unité d'initialisation (220) avec la valeur du deuxième mot de code multitour (MC2).

3. Codeur rotatif multitour selon la revendication 2, une unité d'interface (210, 310) étant présente pour la communication avec une électronique suivante par le biais d'un canal de transmission de données (230, 330) et l'initialisation de la première unité multitour (20, 40) pouvant être déclenchée par l'unité d'interface (210, 310).

4. Codeur rotatif multitour selon la revendication 1, la valeur du deuxième mot de code multitour (MC2) pouvant, en vue du référencement, être mémorisée en tant que valeur de décalage (OFF) par une unité d'initialisation (320) après l'activation de l'alimentation électrique, laquelle indique la différence entre la valeur du deuxième mot de code multitour (MC2) et la valeur du premier mot de code multitour (MC1).

5. Codeur rotatif multitour selon l'une des revendications précédentes, la première unité multitour (20, 40) étant une unité multitour basée sur un compteur.

6. Procédé pour faire fonctionner un codeur rotatif multitour comprenant
- une unité monotour (10), comportant un porte-code (11) qui peut être palpé par un dispositif de palpage monotour (13) en vue de générer des signaux de position monotour (SP, SP1, SP2) et une unité d'interprétation monotour (14) destinée à transformer les signaux de position monotour (SP, SP1, SP2) en au moins un mot de code monotour (SC, SC1, SC2), lequel indique la position absolue d'un arbre d'entrée (W) à l'intérieur d'un tour,
- une première unité multitour (20, 40) dépendante de l'alimentation électrique, comportant au moins un premier porte-code multitour (11, 21) qui peut être palpé par un premier dispositif de palpage multitour (13, 23) en vue de générer des premiers signaux de position multitour (MP1) et une première unité d'interprétation multitour (24) destinée à transformer les premiers signaux de position multitour (MP1) en un premier mot de code multitour (MC1), lequel indique le nombre des tours effectués par l'arbre d'entrée (W),
- une deuxième unité multitour (30) indépendante de l'alimentation électrique, laquelle est une unité multitour basée sur un engrenage, comportant au moins un deuxième porte-code multitour (31.1, 31.2) qui peut être palpé par un deuxième dispositif de palpage multitour (33.1, 33.2) en vue de générer des deuxièmes signaux de position multitour (MP2.1, MP2.2) et une deuxième unité d'interprétation multitour (34) destinée à transformer les deuxièmes signaux de position multitour (MP2.1, MP2.2) en un deuxième mot de code multitour (MC2), lequel indique également le nombre des tours parcourus par l'arbre d'entrée (W),
la valeur du premier mot de code multitour (MC1) de la première unité multitour (20, 40) étant référencée à la valeur du deuxième mot de code multitour (MC2) au cours d'une phase d'initialisation après l'activation de l'alimentation électrique du codeur rotatif multitour.

7. Procédé selon la revendication 6, la première unité multitour (20, 40), en vue du référencement, étant initialisée après l'activation de l'alimentation électrique par une unité d'initialisation (220) avec la valeur du deuxième mot de code multitour (MC2).

8. Procédé selon la revendication 7, une unité d'interface (210, 310) étant présente pour la communication avec une électronique suivante par le biais d'un canal de transmission de données (230, 330) et l'initialisation de la première unité multitour (20, 40) étant déclenchée par l'unité d'interface (210, 310).

9. Procédé selon la revendication 6, la valeur du deuxième mot de code multitour (MC2), en vue du référencement, étant mémorisée en tant que valeur de décalage (OFF) par une unité d'initialisation (320) après l'activation de l'alimentation électrique, laquelle indique la différence entre la valeur du deuxième mot de code multitour (MC2) et la valeur du premier mot de code multitour (MC1).
